# EUROPÄISCHE PATENTSCHRIFT

(11) **EP 1 595 737 B1**
(45) Veröffentlichungstag und Bekanntmachung des Hinweises auf die Patenterteilung: **01.10.2008**
(21) Anmeldenummer: 05010560.0
(22) Anmeldetag: 10.05.2005
(51) Int. Cl.: B60P 1/43, A61G 3/06

(54) **Ausfahrbare Einstiegsrampe für Fahrzeuge des öffentlichen Personennah- und -fernverkehrs**
Extensible ramp for public service vehicles
Rampe extensible pour véhicules de transport en commun

(30) Priorität: 13.05.2004 DE 202004007704 U
(43) Veröffentlichungstag der Anmeldung: 16.11.2005
(73) Patentinhaber: Gebr. Bode GmbH & Co. KG, 34123 Kassel (DE)
(72) Erfinder: Grein, Horst, 34637 Schrecksbach (DE); Sprenger, Thorsten, 34253 Lohfelden (DE); Schröder, Michael, 34388 Trendelburg (DE)
(74) Vertreter: Bauer Vorberg Kayser Patentanwälte

(56) Entgegenhaltungen:
- EP-A- 1 090 619
- DE-A1- 4 134 559
- DE-U1- 20 209 257

## Beschreibung

Die Erfindung betrifft eine ausfahrbare Einstiegsrampe für Fahrzeuge des öffentlichen Personennah- und -fernverkehrs mit den Merkmalen aus dem Oberbegriff des Patentanspruchs 1.

Eine derartige Einstiegsrampe ist bekannt und in DE 41 34 559 C2 beschrieben. Bei dieser bekannten Rampe besitzen die Führungshebel jeweils einen abgewinkelten Steuerarm, der mit Erreichen der letzten Ausschiebebewegungsphase auf einen zugeordneten Anschlag aufläuft und beim weiteren Ausschiebeantrieb des Führungshebels dessen Hochklappbewegung und damit das Anheben des hinteren Endes der Trittplatte erzwingt. Dies hat zur Folge, dass eine relativ hohe Belastung der Führungshebel auftritt.

Der Erfindung liegt die Aufgabe zugrunde, eine Einstiegsrampe mit den Merkmalen aus dem Oberbegriff des Patentanspruchs 1 so auszugestalten, dass eine besonders hohe Belastung der Führungshebel vermieden wird, das hintere Ende der Trittplatte sicher angehoben und in der angehobenen Stellung arretiert wird. Weiterhin sollte die Konstruktion einfach und wenig kostenaufwändig sein.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Eine besonders vorteilhafte Ausführungsform der erfindungsgemäßen Einstiegsrampe ist in Patentanspruch 3 sowie in Patentansprüchen 4 und 5 beschrieben.

Einstiegsrampen, bei denen die Trittplatte im eingefahrenen Zustand in einem Gehäuse liegt, bei dem oberhalb der oberen Kante der Ausfahröffnung eine Verschlussklappe derart angelenkt ist, dass sie im heruntergeklappten Zustand das Gehäuse an der Vorderseite verschließt und im hochgeklappten Zustand bei ausgefahrener Trittplatte unmittelbar an den Fahrzeugboden anschließend den Spalt zwischen der Türschwellenstufe bzw. dem Fahrzeugboden und dem hinteren Ende der Trittplatte überbrückt, sind an sich bekannt und beispielsweise in DE 44 41 929 A1 beschrieben. Bei diesen bekannten Einstiegsrampen wird die Verschlussklappe durch die ausfahrende Trittplatte geöffnet und schleift während der Ausfahrbewegung auf der Oberfläche der Trittplatte. Hierdurch treten Verschleißerscheinungen an der Oberseite der Trittplatte auf. Bei der besonders vorteilhaften Ausführungsform der erfindungsgemäßen Einstiegsrampe wird durch eine besondere Führung der Verschlussklappe erreicht, dass diese während der Ausfahrbewegung der Trittplatte nicht auf der Oberseite der Trittplatte aufliegt.

Im folgenden wird anhand der beigefügten Zeichnungen ein Ausführungsbeispiel für eine Einstiegsrampe nach der Erfindung näher erläutert.

### In den Zeichnungen zeigen:

Fig. 1 in stark schematisierter Darstellung eine Einstiegsrampe in Seitenansicht bei ausgefahrener Trittplatte;

Fig. 2 die Einstiegsrampe nach Fig. 1 in einer Draufsicht;

Fig. 3 die Einstiegsrampe nach Fig. 1 und 2 in teilweise geschnittener Seitenansicht im eingefahrenen Zustand der Trittplatte;

Fig. 4 in gegenüber Fig. 3 vergrößerter Darstellung den Bereich Y4 aus Fig. 3;

Fig. 5 in gegenüber Fig. 3 vergrößerter Darstellung den Bereich X5 aus Fig. 3 in vergrößerter Darstellung;

Fig. 5.1 den in Fig. 5 dargestellten Bereich in Teilaufsicht;

Fig. 6 in einer Darstellung analog Fig. 5 den Bereich X5 aus Fig. 3 bei hochgeklappter Verschlussklappe und teilweise ausgefahrener Trittplatte;

Fig. 7 in einer Darstellung analog Fig. 5 den Bereich X5 aus Fig. 3 bei vollständig ausgefahrener Trittplatte mit aufliegender Verschlussklappe.

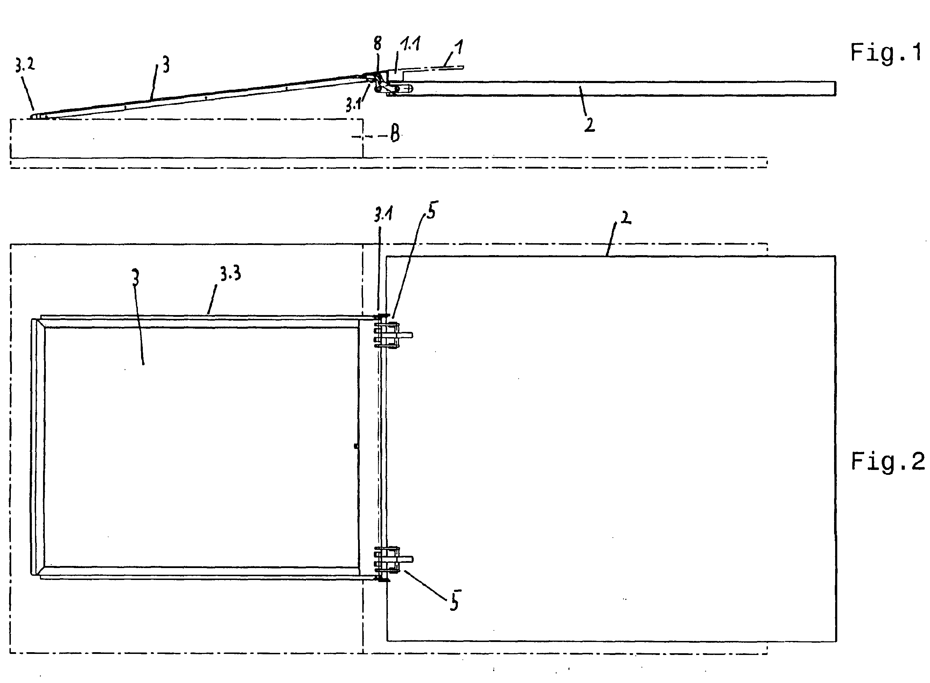

In den Fig. 1 bis 3 ist eine Einstiegsrampe dargestellt, die in nicht eigens dargestellter Weise im Einstiegsbereich eines Fahrzeugs des öffentlichen Personennah- oder -fernverkehrs angeordnet ist, von welchem nur ein im Türbereich liegender Teil 1 des Fahrzeugbodens und eine Türschwellenstufe 1.1 dargestellt sind.

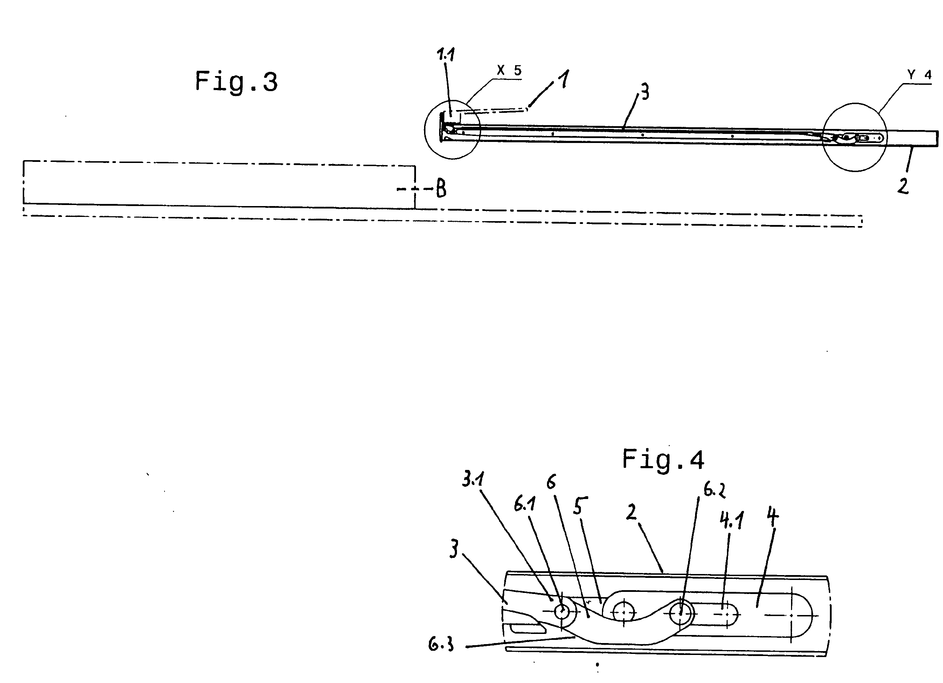

Unterhalb des Fahrzeugbodens 1 ist im Bereich unterhalb und hinter der Türschwellenstufe 1.1 ein Gehäuse 2 angeordnet, in welchem in nicht dargestellter und an sich bekannter Weise Antriebs- und Führungsmittel für eine Trittplatte 3 angeordnet sind, welche mittels der Antriebs- und Führungsmittel aus einer in Fig. 3 dargestellten Ruhestellung in eine in den Fig. 1 und 2 dargestellte Gebrauchsstellung ausgefahren werden kann. Hierzu ist das hintere Ende 3.1 der Trittplatte 3 über weiter unten näher erläuterte erste Führungshebel 5 an einem im Gehäuse 2 geführten, von den Antriebsmitteln in Ausfahrrichtung verschiebbaren Transportelement 4 angelenkt, das sich über die gesamte Breite der Einstiegsrampe erstreckt. Im dargestellten Ausführungsbeispiel sind zur Verbindung der Trittplatte 3 mit dem Transportelement 4 zwei Führungshebel 5 vorgesehen. Selbstverständlich können auch mehrere Führungshebel vorhanden sein.

Wie Fig. 1 zeigt, liegt die Trittplatte 3 im ausgefahrenen Zustand mit ihrem vorderen Ende 3.2 beispielsweise auf der Oberfläche eines Bordsteins B auf, und das hintere Ende 3.1 der Trittplatte 3 ist so weit angehoben, dass es im wesentlichen auf der Höhe der Türschwellenstufe 1.1 liegt, wobei in weiter unten näher dargestellter Weise der Spalt zwischen dem hinteren Ende 3.1 der Trittplatte 3 und der Türschwellenstufe 1.1 durch eine Verschlussklappe 8 überbrückt ist, so dass ein stufenloser Übergang vom Fahrzeugboden 1 auf die Trittplatte 3 ermöglicht ist.

Der Antrieb des Transportelements 4 kann in nicht dargestellter und an sich bekannter Weise über Gewindespindeln oder auch Ketten- oder Riemenantriebe erfolgen.

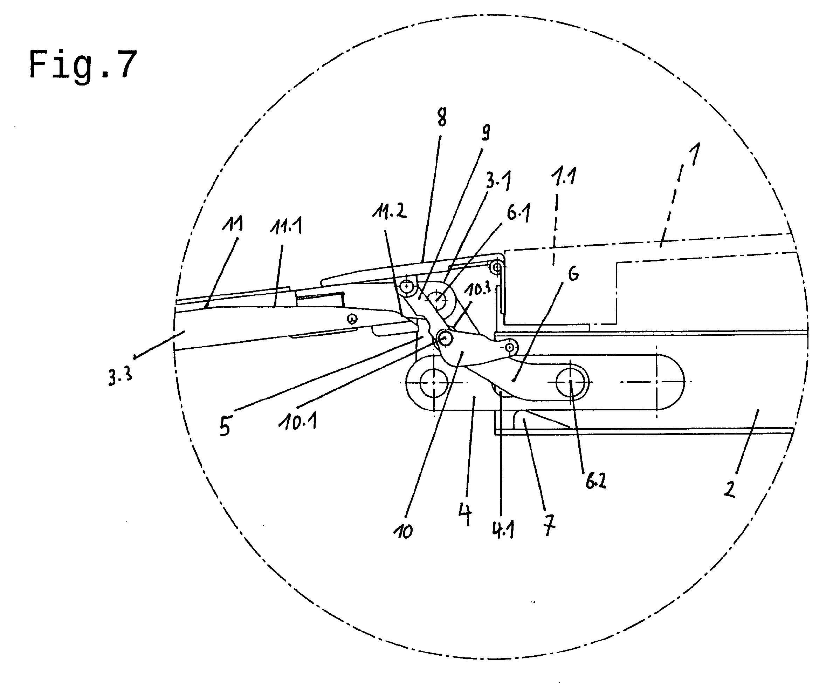

Im folgenden wird die gelenkige Verbindung zwischen dem hinteren Ende 3.1 der Trittplatte 3 und dem Transportelement 4 anhand der Fig. 4 und 7 näher erläutert.

Wie Fig. 4 zu entnehmen, liegen im eingefahrenen Zustand der Trittplatte 3 - und auch im teilweise ausgefahrenen Zustand der Trittplatte 3 - die ersten Führungshebel 5 in bezug auf das Transportelement 4 in einer im wesentlichen in Ausfahrrichtung verlaufenden, mit dem Transportelement 4 eine Totpunktlage bildenden Strecklage. Am hinteren Ende 3.1 der Trittplatte 3 sind zusätzliche Führungselemente 6 mit ihrem einen Ende 6.1 angelenkt, deren anderes Ende 6.2 jeweils mit dem Transportelement 4 über ein Gelenk verbunden ist, welches in einem im Transportelement 4 in Ausfahrrichtung verlaufenden Langloch 4.1 verschiebbar geführt ist. Wie den Fig. 4 und 7 zu entnehmen, ist das Langloch 4.1 derart bemessen, dass in der Strecklage der Führungshebel 5 (Fig. 4) das Gelenk am vorderen Ende des Langlochs 4.1 liegt. Wenn (Fig. 7) am Ende der Ausfahrbewegung die ersten Führungshebel 5 in eine Endlage hochgeklappt sind, wodurch das hintere Ende 3.1 der Trittplatte 3 angehoben wird, liegt das Gelenk am Ende 6.2 des Führungselements 6 am hinteren Ende des Langlochs 4.1. Zum Hochklappen der ersten Führungshebel 5 muss ihre Totpunktlage zum Transportelement 4 ausgelöst werden. Dies geschieht, indem in der Bahn des Führungselements 6 im Bereich der letzten Phase der Ausfahrbewegung am Gehäuse 2, wie in Fig. 7 dargestellt, eine Schrägfläche 7 angeordnet ist, auf welche das Führungselement mit einer an seinem vorderen Ende angeordneten aufwärtsgerichteten Schrägfläche 6.3 aufläuft. Hierdurch wird das vordere Ende 6.1 des Führungselements 6 angehoben und mit ihm das jeweils vordere Ende der Führungshebel 5, die sich nunmehr nach Auslösen der Totpunktlage weiter aufrichten und schließlich in die in Fig. 7 dargestellte hochgeklappte Stellung geraten, in der das mit ihnen verbundene hintere Ende 3.1 der Trittplatte 3 auf die gewünschte Höhe angehoben ist. In dieser Stellung ist, wie Fig. 7 zu entnehmen, eine das Wiederabsenken des hinteren Endes 3.1 der Trittplatte 3 verhindernde Arretierungslage erreicht, indem der Führungshebel 5 in eine Übertotpunktstellung gerät und sich über das Führungselement 6 am Ende des Langlochs 4.1 im Transportelement 4 abstützt, so dass er nicht in Richtung auf das Gehäuse 2 abkippen kann.

Beim Wiedereinfahren der Trittplatte 3 bewegt sich das Transportelement 4 in das Gehäuse 2 hinein und zieht die Führungshebel unter Absenkung des hinteren Endes 3.1 der Trittplatte 3 wieder in ihre gestreckte Lage zurück.

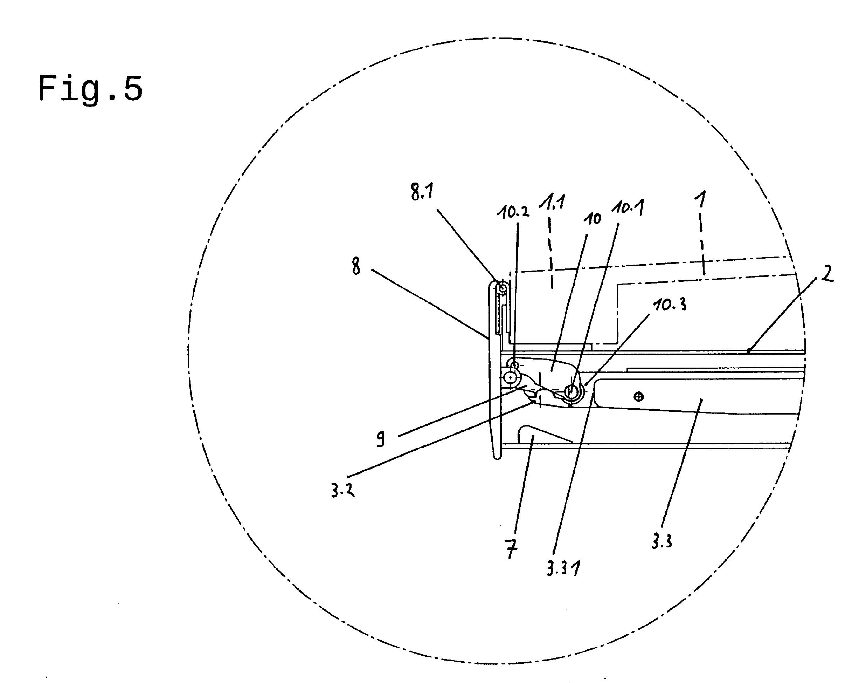

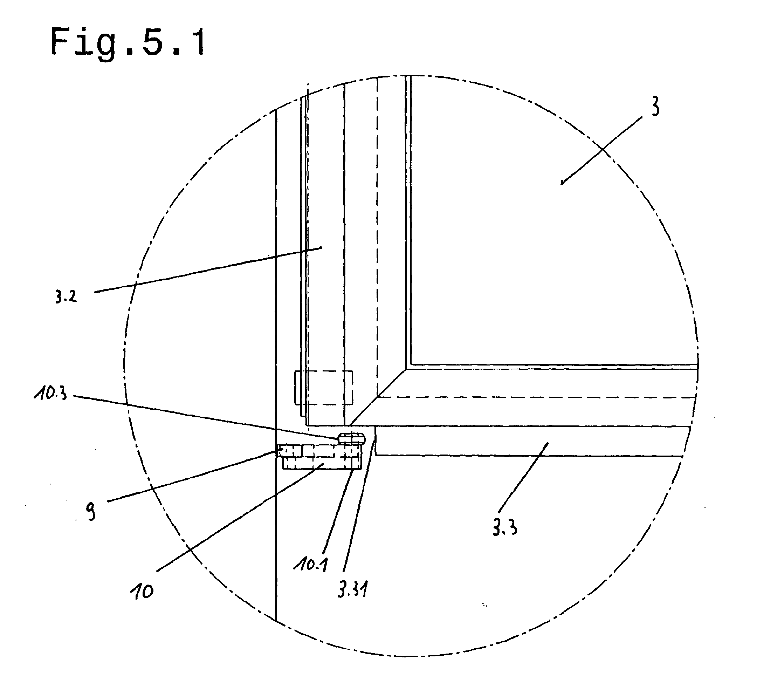

Im folgenden wird anhand der Fig. 5 bis 7 die Funktion der Verschlussklappe 8 bei der Ausfahr- und Einfahrbewegung der Trittplatte 3 näher erläutert.

Wie Fig. 5 zeigt, ist oberhalb der oberen Kante der Ausfahröffnung des Gehäuses 2 eine Verschlussklappe 8 über ein Gelenk 8.1 derart an der Türschwellenstufe 1.1 angelenkt, dass sie im heruntergeklappten Zustand das Gehäuse 2 an der Vorderseite verschließt.

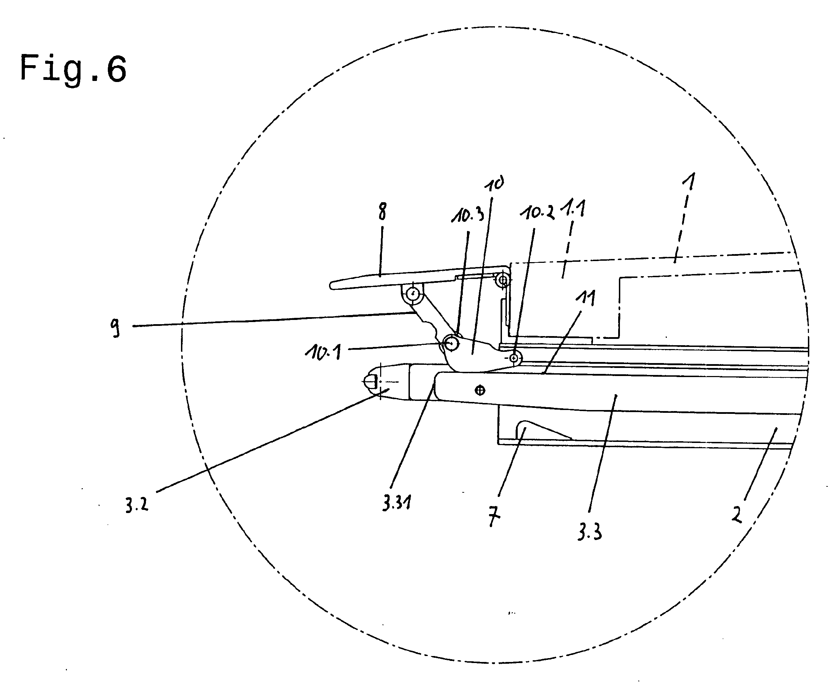

Zur Führung der Verschlussklappe 8 sind an dieser zweite Führungshebel 9 angelenkt, die jeweils gelenkig mit einem Ende 10.1 eines zweiten Führungselements 10 verbunden sind, dessen anderes Ende 10.2 am Gehäuse 2 angelenkt ist und zwar derart, dass im geschlossenen Zustand der Verschlussklappe 8 der zweite Führungshebel 9 und das zweite Führungselement 10 zusammengeklappt sind. An den beiden Seiten der Trittplatte 3 sind Führungsleisten 3.3 angeordnet, deren vorderes Ende hinter dem vorderen Ende 3.2 der Trittplatte liegt und als Anschlagfläche 3.31 ausgebildet ist. Diese Anschlagfläche 3.31 trifft, wie den Fig. 5 und 5.1 zu entnehmen, auf eine Rolle 10.3, die am Ende 10.1 des zweiten Führungselements 10 angeordnet ist. Da der Führungshebel 9 und das zweite Führungselement 10 sich im zusammengeklappten Zustand nicht in einer Totpunktlage befinden, werden sie beim Auftreffen der Anschlagfläche 3.31 auf die Rolle 10.3 derart herumgeschwenkt, dass das zweite Führungselement 10 und der zweite Führungshebel 9 auseinanderklappen und das zweite Führungselement 10 dabei, wie ein Vergleich der Fig. 5 und 6 zeigt, um ca. 180° verschwenkt wird, so dass es in eine an der Führungsleiste 3.3 angeordnete Führungsbahn 11 eingreift. In dieser Führungsbahn 11 ist das zweite Führungselement 10 derart geführt, dass die Verschlussklappe 8 von der Trittplatte 3 weg angehoben wird, wie dies Fig. 6 zu entnehmen ist.

Die Führungsbahn 11 verläuft zunächst von der Anschlagfläche 3.31 der Führungsleiste 3.3 bis zu einer vorgegebenen Stelle im hinteren Bereich der Führungsleiste 3.3 im wesentlichen parallel zur Oberseite der Trittplatte, so dass die Verschlussklappe 8 in der in Fig. 6 dargestellten, von der Trittplatte 3 weg angehobenen Stellung verbleibt. In der letzten Phase der Ausfahrbewegung der Trittplatte 3 gerät das zweite Führungselement 10, wie aus Fig. 7 zu ersehen, in einen Abschnitt 11.1 der Führungsbahn 11, der unter einem ersten Winkel schräg abfallend zur Oberseite der Trittplatte 3 verläuft und schließlich in einem letzten Abschnitt 11.2 der Führungsbahn 11, der unter einem zweiten, größeren Winkel schräg abfallend bis zur Hinterkante 3.1 der Trittplatte verläuft. Diese Ausbildung der Führungsbahn in den Abschnitten 11.1 und 11.2 hat zur Folge, dass die Verschlussklappe 8 sich absenkt. Schließlich wird am Ende der Ausfahrbewegung das zweite Führungselement 10 von der Führungsbahn 11 ganz freigegeben und die Verschlussklappe fällt, wie in Fig. 7 gezeigt, auf die Oberseite der Trittplatte auf und bildet einen stufenlosen Übergang zwischen der Türschwellenstufe 1.1 und der Trittplatte 3.

Bei der Einfahrbewegung der Trittplatte 3 wird das hintere Ende 3.1 der Trittplatte 3 etwas abgesenkt, und das zweite Führungselement 10 gerät über die Abschnitte 11.2 und 11.1 wieder auf die Führungsbahn 11, wodurch erreicht wird, dass die Verschlussklappe sich von der Oberfläche der Trittplatte 3 abhebt, bis sich am Ende der Einfahrbewegung die Verschlussklappe 8 wieder schließt und die zweiten Führungshebel 9 und die zweiten Führungslemente 10 wieder in die in Fig. 5 dargestellte Ausgangsstellung im eingeklappten Zustand zurückkehren.

## Patentansprüche

1. Ausfahrbare Einstiegsrampe für Fahrzeuge des öffentlichen Personennah- und -fernverkehrs mit einer Trittplatte (3), die im eingefahrenen Zustand in einem unterhalb des Fahrzeugbodens (1) im Bereich hinter einer Türschwellenstufe (1.1) angeordneten Gehäuse (2) liegt, in welchem die Antriebs- und Führungsmittel für die Trittplatte (3) angeordnet sind, und aus dem Gehäuse (2) in eine Gebrauchsstellung ausfahrbar ist, wozu das hintere Ende (3.1) der Trittplatte (3) über gelenkig mit der Trittplatte (3) verbundene erste Führungshebel (5) an einem im Gehäuse (2) geführten, von den Antriebsmitteln in Ausfahrrichtung verschiebbaren Transportelement (4) angelenkt ist und die ersten Führungshebel (5) in der letzten Phase der Ausfahrbewegung aus einer im wesentlichen in Ausfahrrichtung verlaufenden, mit dem Transportelement (4) eine Totpunktlage bildenden Strecklage in eine Endlage hochklappbar sind, wodurch das hintere Ende der Trittplatte (3.1) angehoben wird und in der hochgeklappten Stellung arretiert ist, durch **gekennzeichnet**, dass am hinteren Ende (3.1) der Trittplatte (3) Führungselemente (6) mit einem Ende (6.1) angelenkt sind, deren anderes Ende (6.2) jeweils mit dem Transportelement (4) über ein Gelenk verbunden ist, welches in einem im Transportelement (4) in Ausfahrrichtung verlaufenden Langloch (4.1) verschiebbar geführt ist, wobei das Langloch (4.1) so bemessen ist, dass in der Strecklage des ersten Führungshebels (5) das Gelenk am vorderen Ende des Langlochs (4.1) und in der hochgeklappten Endlage am hinteren Ende des Langlochs (4.1) liegt, und in der Bahn des jeweiligen Führungselements (6) im Bereich der letzten Phase der Ausfahrbewegung am Gehäuse eine Schrägfläche (7) angeordnet ist, auf welche das Führungselement (6) aufläuft und zur Auslösung der Totpunktlage zwischen dem ersten Führungshebel (5) und dem Transportelement (4) und zur Einleitung des Hochklappens des ersten Führungshebels (5) angehoben wird.

2. Einstiegsrampe nach Anspruch 1, **dadurch gekennzeichnet, dass** das Führungselement (6) an seiner Unterseite am vorderen Ende (6.1) eine aufwärtsgerichtete Schrägfläche (6.3) besitzt, mit der es auf die Schrägfläche (7) des Gehäuses (2) aufläuft.

3. Einstiegsrampe nach Anspruch 1 oder 2, **dadurch gekennzeichnet, dass** oberhalb der oberen Kante der Ausfahröffnung des Gehäuses (2) eine Verschlussklappe (8) derart angelenkt ist, dass sie im heruntergeklappten Zustand das Gehäuse (2) an der Vorderseite verschließt und im hochgeklappten Zustand bei ausgefahrener Trittplatte (3) unmittelbar an den Fahrzeugboden anschließend den Spalt zwischen der Türschwellenstufe (1.1) und dem hinteren Ende (3.1) der Trittplatte (3) überbrückt, wobei an der Verschlussklappe (8) zweite Führungshebel (9) angelenkt sind, die jeweils gelenkig mit einem Ende (10.1) eines zweiten Führungselements (10) verbunden sind, dessen anderes Ende (10.2) am Gehäuse (2) angelenkt ist derart, dass im geschlossenen Zustand der Verschlussklappe (8) der zweite Führungshebel (9) und das zweite Führungselement (10) zusammengeklappt sind und beim Ausfahren der Trittplatte (3) durch eine mit der Trittplatte (3) verbundene Anschlagfläche (3.31) das zweite Führungselement (10) und der zweite Führungshebel (9) auseinandergeklappt und das zweite Führungselement (10) um ca. 180° verschwenkt wird und in eine an der Trittplatte (3) angeordnete Führungsbahn (11) eingreift, in der es so geführt ist, dass die Verschlussklappe (8) von der Trittplatte (3) weg angehoben wird, bis das zweite Führungselement (10) in der letzten Phase der Ausfahrbewegung von der Führungsbahn (11) freigegeben wird, so dass die Verschlussklappe (8) auf der Oberseite der Trittplatte (3) aufliegt.

4. Einstiegsrampe nach Anspruch 3, **dadurch gekennzeichnet, dass** die Führungsbahn (11) für das zweite Führungselement (10) an der Trittplatte (3) von der Vorderkante (3.2) der Trittplatte bis zu einer vorgegebenen Stelle vor der Hinterkante (3.1) der Trittplatte (3) im wesentlichen parallel zur Oberseite der Trittplatte verläuft und von der vorgegebenen Stelle bis zur Hinterkante (3.1) schräg abfallend verläuft.

5. Einstiegsrampe nach Anspruch 4, **dadurch gekennzeichnet, dass** die Führungsbahn (11) von der vorgegebenen Stelle an in einem ersten Abschnitt (11.1) unter einem ersten Winkel zur Oberseite der Trittplatte (3) schräg abfallend und daran anschließend in einem zweiten Abschnitt (11.2) unter einem größeren Winkel bis zur Hinterkante (3.1) der Trittplatte (3) schräg abfallend verläuft.

## Claims

1. A deployable boarding ramp for local and long distance public transport vehicles with a step plate (3) which, when retracted, lies in a housing (2) that is disposed in the region behind a door sill step (1.1) underneath the bottom (1) of the vehicle and accommodates the drive and guide means for said step plate (3), and which is adapted for being deployed into a position of utilization, out of said housing (2), for which purpose the rear end (3.1) of said step plate (3) is articulated to a transport element (4) guided in said housing (2) and adapted for displacement in the direction of deployment by said drive means via first guide levers (5) hinge-linked to said step plate (3) and said guide levers (5) being tiltable upward from an extended position substantially extending in the direction of deployment and forming a dead center position with the transport element (4) into an end position in the last phase of the deployment movement, the rear end (3.1) of said step plate being lifted and stopped in the upward tilted position as a result thereof, **characterized in that** guide elements (6) are articulated at their one end (6.1) to the end (3.1) of said step plate (3), the other end (6.2) thereof being respectively connected to said transport element (4) via a hinge that is displaceably guided in a long hole (4.1) extending in said transport element (4) in the direction of deployment, said long hole (4.1) being dimensioned such that, when said first guide lever (5) is in the extended position, the hinge lies at the front end of said long hole (4.1) and that, when it is in the upward tilted end position, it lies at the rear end of said long hole (4.1), and that an inclined surface (7) is disposed on said housing, in the trajectory of the respective guide element (6) in the region of the last phase of the deployment, said guide element (6) hitting said inclined surface and being lifted for enabling the dead center position between said first guide lever (5) and said transport element (4) and for inducing the upward tilt of said first guide lever (5).

2. The boarding ramp as set forth in claim 1, **characterized in that**, on its underside at the front end (6.1) thereof, the guide element (6) has an upward oriented inclined surface (6.3) with which it strikes the inclined surface (7) of the housing (2).

3. The boarding ramp as set forth in claim 1 or 2, **characterized in that** a closing flap (8) is articulated above the upper edge of the deployment opening of the housing (2) in such a manner that it closes the housing (2) on its front side when tilted downward and that, when tilted upward and when the step plate (3) is deployed, it bridges the gap between the door sill step (1.1) and the rear end (3.1) of the step plate (3) immediately adjoining the bottom of the vehicle, second guide levers (9) being articulated to said closing flap (8), each of them being hinge-linked to one end (10.1) of a second guide element (10), the other end (10.2) thereof being articulated to the housing (2) in such a manner that, when the closing flap (8) is closed, said second guide lever (9) and said second guide element (10) are folded together and that, when said step plate (3) is being deployed, said second guide element (10) and said second guide lever (9) are being unfolded by a limit stop (3.31) connected to said step plate (3) and said second guide element (10) being pivoted approximately 180° and engaging a guide path (11) disposed on said step plate in which it is guided for said closing flap (8) to be lifted from said step plate (3) until said second guide element (10) is being released from the guide path (11) in the last phase of the deployment movement so that said closing flap (8) rests on the top side of said step plate (3).

4. The boarding ramp as set forth in claim 3, **characterized in that** the guide path (11) for the second guide element (10) extends substantially parallel to the top side of the step plate on said step plate (3), from the front edge (3.2) of said step plate to a prescribed place before the rear edge (3.1) of said step plate (3), and sloping downward from said prescribed place to said rear edge (3.1).

5. The boarding ramp as set forth in claim 4, **characterized in that**, in a first portion (11.1), the guide path (11) slopes downward from the prescribed place at a first angle with respect to the top side of the step plate (3) and that, in a second portion (11.2) adjoining said first portion, it slopes downward at a larger angle as far as the rear edge (3.1) of the step plate (3).

## Revendications

1. Rampe d'accès déployable pour véhicules du trafic voyageurs à courte et à grande distance, comprenant une palette de marchepied (3) qui, en état rentré, se trouve dans une cassette (2) laquelle est disposée au-dessous du plancher du véhicule (1) dans la zone située derrière une marche de seuil de porte (1.1) et dans laquelle sont disposés les moyens d'entraînement et de guidage pour la palette de marchepied (3), et qui peut être sortie de ladite cassette (2) pour occuper une position d'utilisation, ce pour quoi l'extrémité arrière (3.1) de la palette de marchepied (3) est articulée, par l'intermédiaire de premiers leviers de guidage (5) reliés de façon articulée à la palette de marchepied (3), sur un élément de transport (4) guidé dans ladite cassette (2) et déplaçable dans la direction de sortie par les moyens d'entraînement, et lesdits leviers de guidage (5), dans la dernière phase du mouvement sortant, peuvent être relevés - depuis une position d'extension s'étendant pour l'essentiel dans la direction de sortie et formant une position de point mort avec ledit élément de transport (4) - dans une position finale, ce par quoi l'extrémité arrière (3.1) de la palette de marchepied sera relevée et est arrêtée dans la position relevée, **caractérisée par le fait que** sur ladite extrémité arrière (3.1) de la palette de marchepied (3) est articulée une extrémité (6.1) d'éléments de guidage (6) dont l'autre extrémité (6.2) est reliée respectivement à l'élément de transport (4) au moyen d'une articulation qui est guidée à coulissement dans un trou oblong (4.1) s'étendant dans ledit élément de transport (4) dans la direction de sortie, ledit trou oblong (4.1) étant dimensionné de manière à ce que, dans la position d'extension du premier levier de guidage (5), ladite articulation se situe à l'extrémité avant du trou oblong (4.1) et, dans la position finale relevée, à l'extrémité arrière du trou oblong (4.1), et que, sur la voie de l'élément respectif de guidage (6), dans la zone de la dernière phase du mouvement sortant, une surface inclinée (7) est disposée sur la cassette, avec laquelle l'élément de guidage (6) entre en contact et sera relevé pour déclencher la position de point mort entre le premier levier de guidage (5) et l'élément de transport (4) et pour provoquer le relèvement du premier levier de guidage (5).

2. Rampe d'accès selon la revendication 1, **caractérisée par le fait que** ledit élément de guidage (6) présente sur sa face inférieure, à l'extrémité avant (6.1), une surface inclinée dirigée vers le haut (6.3) par laquelle il entre en contact avec ladite surface inclinée (7) de la cassette (2).

3. Rampe d'accès selon la revendication 1 ou 2, **caractérisée par le fait qu'**une trappe de fermeture (8) est articulée au-dessus du bord supérieur de l'ouverture de sortie de la cassette (2) de telle façon que, en état rabattu, elle ferme la cassette (2) sur le front et, en état relevé, lorsque la palette de marchepied (3) est sortie, elle ponte la fente entre la marche de seuil de porte (1.1) et l'extrémité arrière (3.1) de la palette de marchepied (3) en étant directement contiguë au plancher du véhicule, sur ladite trappe de fermeture (8) étant articulés de seconds leviers de guidage (9) qui sont reliés chacun de façon articulée à une extrémité (10.1) d'un deuxième élément de guidage (10) dont l'autre extrémité (10.2) est articulée sur la cassette (2) de manière à ce que, lorsque la trappe de fermeture (8) est fermée, ledit second levier de guidage (9) et ledit deuxième élément de guidage (10) soient repliés et que, lorsque la palette de marchepied (3) sera sortie, le deuxième élément de guidage (10) et le second levier de guidage (9) soient dépliés par une surface de butée (3.31) reliée à la palette de marchepied (3) et le deuxième élément de guidage (10) pivote de 180° à peu près et s'engage dans une glissière (11) disposée sur la palette de marchepied (3), dans laquelle il est guidé de telle manière que la trappe de fermeture (8) est relevée en s'écartant de la palette de marchepied (3) jusqu'à ce que le deuxième élément de guidage (10) soit désengagé de la glissière (11) dans la dernière phase du mouvement sortant de sorte que la trappe de fermeture (8) s'appuie contre la face supérieure de la palette de marchepied (3).

4. Rampe d'accès selon la revendication 3, **caractérisée par le fait que** ladite glissière (11) pour le deuxième élément de guidage (10) s'étend sur la palette de marchepied (3) pour l'essentiel parallèlement à la face supérieure de la palette de marchepied depuis l'arête avant (3.2) de la palette de marchepied jusqu'à un point donné devant l'arête arrière (3.1) de la palette de marchepied (3) et qu'elle s'étend depuis ledit point donné jusqu'à l'arête arrière (3.1) de manière à descendre en pente.

5. Rampe d'accès selon la revendication 4, **caractérisée par le fait que**, à partir dudit point donné, la glissière (11) descend en pente dans une première section (11.1) à un premier angle par rapport à la face supérieure de la palette de marchepied (3) et, suite à celle-ci, dans une deuxième section (11.2), à un angle plus important jusqu'à l'arête arrière (3.1) de la palette de marchepied (3).
